# FASCICULE DE BREVET EUROPEEN

(11) **EP 0 588 729 B1**
(45) Date de publication et mention de la délivrance du brevet: **22.05.1996**
(21) Numéro de dépôt: 93402269.0
(22) Date de dépôt: 17.09.1993
(51) Int. Cl.: B60K 15/035

(54) **Dispositif de récupération de vapeurs de carburant**
Vorrichtung zur Rückgewinnung von Kraftstoffdämpfen
Device for fuel vapour recovery

(30) Priorité: 18.09.1992 FR 9211138
(43) Date de publication de la demande: 23.03.1994
(73) Titulaire: Société Anonyme dite: REGIE NATIONALE DES USINES RENAULT, F-92109 Boulogne Billancourt (FR)
(72) Inventeur: Rochette, Bertrand, F-78350 Jouy en Josas (FR)

(56) Documents cités:
- EP-A- 0 301 944
- DE-A- 2 547 065
- FR-A- 2 111 423
- US-A- 4 598 686
- US-A- 4 778 495

## Description

La présente invention concerne un dispositif de récupération des vapeurs de carburant provenant du réservoir de carburant d'un véhicule automobile équipé d'un moteur à combustion interne.

Il est connu pour diminuer les évaporations à l'air du carburant transporté par les véhicules automobiles, évaporations qui sont la cause d'une pollution non négligeable de l'atmosphère, d'utiliser des dispositifs de récupération de ces vapeurs. De tels dispositifs comprennent classiquement un filtre, encore appelé canister, qui contient un matériau adsorbant les vapeurs de carburant. Ce filtre est classiquement relié par une première canalisation à la partie supérieure du réservoir de carburant, par une deuxième canalisation à une source de dépression qui est en général constituée par le circuit d'admission d'air comburant du moteur, et par une troisième canalisation à une source d'air de régénération du matériau adsorbant.

De tels dispositifs permettent ainsi de piéger les vapeurs de carburant qui proviennent du réservoir. Le matériau adsorbant ces vapeurs peut être du charbon actif qui se charge de vapeurs de carburant lorsque le courant de gaz passe de la première canalisation vers la seconde en traversant le filtre et qui se régénère lorsqu'il est balayé à contre courant par l'air de régénération passant de la troisième canalisation vers la seconde. Ce balayage s'effectue par aspiration dans la seconde canalisation, aspiration due notamment à la dépression dans le circuit d'admission du moteur quand celui-ci fonctionne.

L'efficacité de tels dispositifs de récupération de vapeurs de carburant dépend de leur faculté à régénérer le matériau adsorbant. Il est connu qu'une telle régénération est améliorée si l'air de balayage ou de purge à une température suffisante et c'est pourquoi l'on a prévu dans un agencement divulgué par la demande de brevet FR 87/10830 (EP-A-301944) de réaliser un chauffage régulé de cet air. Cependant la mise en oeuvre d'un système de chauffage spécifique de l'air de régénération présente l'inconvénient de compliquer le dispositif de récupération des vapeurs d'essence et par voie de conséquence d'en augmenter le coût.

Le but de cette invention est donc de permettre un fonctionnement efficace du dispositif de récupération des vapeurs de carburant tout en supprimant tout système de chauffage spécifique.

Le dispositif de récupération des vapeurs de carburant à partir d'un réservoir d'un véhicule à moteur, selon l'invention, comprend un filtre contenant un matériau adsorbant ces vapeurs, ce filtre étant relié par une canalisation à une source d'air de régénération du matériau adsorbant.

Selon l'invention, le dispositif de récupération des vapeurs de carburant est caractérisé en ce que l'orifice d'entrée de la canalisation d'amenée de l'air de régénération débouche au voisinage immédiat de moyens échangeurs de température équipant le circuit de refroidissement du moteur.

Selon une autre caractéristique du dispositif objet de l'invention, les moyens échangeurs de température sont formés par un radiateur du type comportant deux boîtes à eau reliées par un faisceau de tubes à ailettes et en ce que le filtre est directement fixé sur l'une des boîtes à eau de façon à présenter l'orifice d'entrée de la canalisation d'amenée de l'air de régénération au droit du faisceau dans le flux d'air chaud.

Selon une autre caractéristique du dispositif objet de l'invention, le filtre s'étend dans le prolongement latéral du radiateur à l'extérieur du flux d'air chaud.

Selon une autre caractéristique du dispositif objet de l'invention, le filtre est positionné sur la boîte à eau par des moyens de suspension à pivot.

Selon une autre caractéristique du dispositif objet de l'invention, les moyens de suspension sont formés par deux charnières du type comportant un charnon mâle et un charnon femelle, permettant un montage et un démontage facile du filtre sur la boîte à eau associée.

Selon une autre caractéristique du dispositif objet de l'invention, le filtre et la boîte à eau associée présentent des pattes de fixation correspondantes permettant l'ancrage du filtre sur la boîte à eau par une simple vis de fixation.

On comprendra mieux les buts, aspects et avantages de la présente invention, d'après la description donnée ci-après d'un mode de réalisation de l'invention, présenté à titre d'exemple non limitatif, en se référant au dessin annexé, dans lequel :
la figure 1 est une vue partielle de dessus du dispositif de récupération des vapeurs de carburant selon l'invention ;
la figure 2 est une vue partielle de face du dispositif de récupération des vapeurs de carburant selon l'invention.

Conformément aux figures, seuls les éléments nécessaires à la compréhension de l'invention ont été représentés.

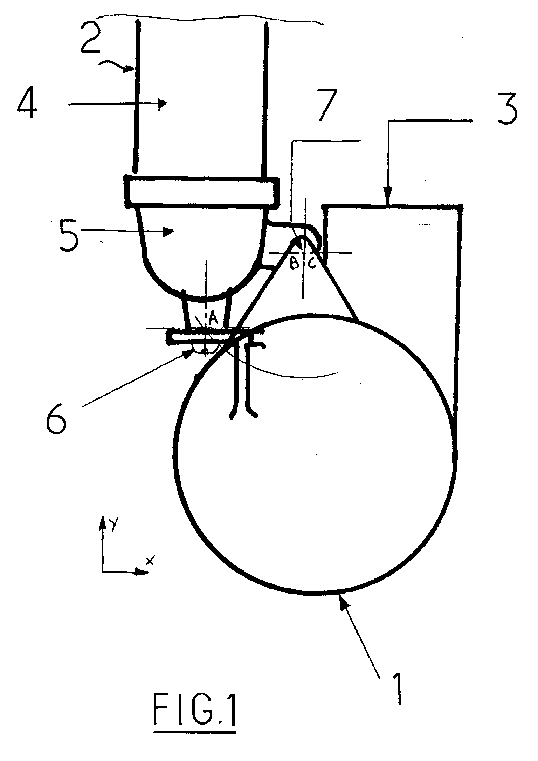

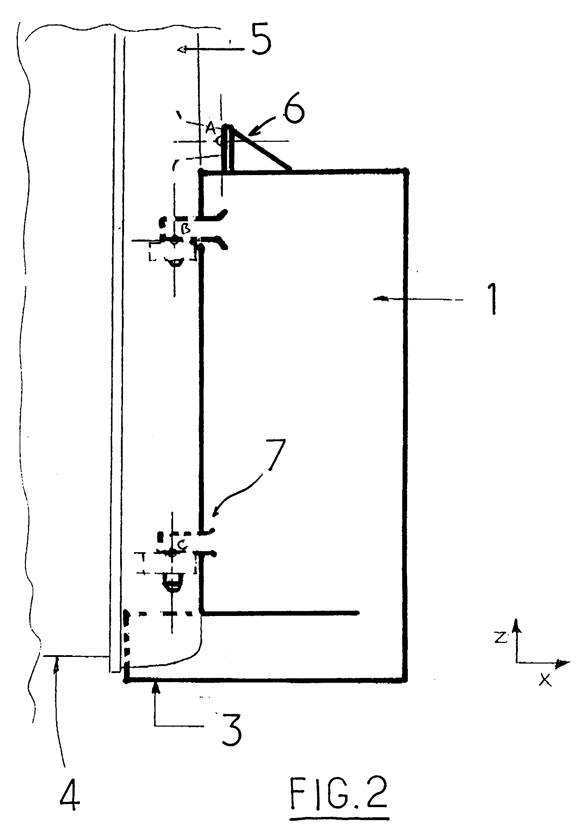

Les figures 1 et 2, représentent un filtre à vapeurs de carburant référencé 1. Ce filtre contient un matériau, par exemple du charbon actif, capable d'adsorber les vapeurs de carburant formées dans le réservoir de carburant d'un véhicule équipé d'un moteur à combustion interne.

Le filtre est relié classiquement à la partie haute du réservoir de carburant par une canalisation non figurée, une autre canalisation non figurée relie le filtre à une source de dépression qui est de préférence le conduit d'admission en gaz comburant du moteur.

Le filtre est enfin relié par une canalisation 3 à une source d'air de régénération du charbon actif.

L'orifice d'entrée de cette canalisation 3 d'amenée de l'air de régénération, débouche directement derrière le radiateur échangeur de chaleur 2 du circuit de refroidissement du moteur de façon à pouvoir prélever de l'air chaud.

Ainsi lors de la phase de régénération du filtre qui s'effectue en phase de fonctionnement du moteur, l'air de balayage a une température suffisante pour opérer la désorption des vapeurs de carburant du charbon actif. La température de l'air chaud ainsi prélevé est de plus régulée par le groupe moto ventilateur du véhicule, ce qui évite tout risque de surchauffe du charbon actif susceptible de provoquer sa détérioration.

Pour permettre le positionnement de l'orifice d'entrée de la canalisation 3 d'amenée de l'air de régénération dans le flux d'air chaud du radiateur 2, le filtre 1 est directement monté sur le radiateur 2, ce qui offre de plus un mode d'implantation du filtre sur le véhicule particulièrement simple et astucieux.

Le radiateur 2 est un échangeur de température eau/air utilisé pour abaisser par un courant d'air atmosphérique la température du liquide de refroidissement, qui s'est échauffé en traversant le carter moteur et la culasse.

Le radiateur 2 présente deux boîtes à eau verticales, faisant office de collecteur d'entrée et de sortie du liquide de refroidissement, reliées horizontalement par un faisceau de tubes à ailettes.

Le filtre est donc positionné sur l'une des boîte à eau 5 de façon à présenter l'orifice d'entrée de la canalisation d'amenée de l'air de régénération au droit du faisceau 4. Le positionnement est réalisé grâce à des moyens de suspension à pivot 7, en l'occurrence deux charnières simples du type comportant un charnon mâle portant le pivot solidaire du filtre 1, et un charnon femelle solidaire de la boîte à eau. Un tel système permet un montage particulièrement simple du filtre. L'assujettissement du filtre 1 sur la boîte à eau 5 est assuré par le vissage d'une vis 6 à travers deux pattes de fixation correspondantes solidaires respectivement du filtre 1 et de la boîte à eau 5.

Pour éviter un échauffement trop important du filtre 1 qui pourrait être préjudiciable notamment en phase d'adsorption des vapeurs, le filtre est positionné dans la région la plus froide du radiateur 2, c'est-à-dire dans la partie inférieure de la boîte à eau 5, le liquide de refroidissement circulant dans le radiateur de haut en bas. De plus le filtre est positionné dans le prolongement du radiateur de façon à être à l'extérieur du flux d'air chaud.

## Revendications

1. Dispositif de récupération des vapeurs de carburant à partir d'un réservoir d'un véhicule à moteur, comprenant un filtre (1) contenant un matériau adsorbant ces vapeurs, ce filtre (1) étant relié par une canalisation (3) à une source d'air de régénération du matériau adsorbant, caractérisé en ce que l'orifice d'entrée de ladite canalisation (3) débouche au voisinage de moyens échangeurs de température (2) équipant le circuit de refroidissement du moteur.

2. Dispositif de récupération des vapeurs de carburant selon la revendication 1, caractérisé en ce que lesdits moyens échangeurs de température sont formés d'un radiateur (2) du type comportant deux boîtes à eau (5) reliées par un faisceau de tubes à ailettes (4) et en ce que le filtre (1) est directement fixé sur l'une desdites boîtes à eau (5).

3. Dispositif de récupération des vapeurs de carburant selon la revendication 1, caractérisé en ce que le filtre (1) s'étend dans le prolongement latéral du radiateur à l'extérieur du flux d'air chaud.

4. Dispositif de récupération des vapeurs de carburant selon l'une quelconque des revendications 2 à 3, caractérisé en ce que le filtre (1) est positionné sur la boîte à eau (5) par des moyens de suspension à pivot (7).

5. Dispositif de récupération des vapeurs de carburant selon la revendication 4, caractérisé en ce que lesdits moyens de suspension sont formés par deux charnières (7) du type comportant un charnon mâle et un charnon femelle, permettant un montage et un démontage facile du filtre (1) sur la boîte à eau (5) associée.

6. Dispositif de récupération des vapeurs de carburant selon l'une quelconque des revendications 4 à 5, caractérisé en ce que le filtre (1) et la boîte à eau (5) associée présentent des pattes de fixation correspondantes permettant l'ancrage du filtre (1) sur la boîte à eau par une simple vis de fixation (6).

## Claims

1. A device for the recovery of fuel vapours from a tank of a motor vehicle, comprising a filter (1) containing a material for adsorbing said vapours, the filter (1) being connected by a conduit (3) to a source of air for regeneration of the adsorbent material, characterised in that the inlet orifice of said conduit (3) opens in the vicinity of heat-exchanger means (2) equipping the cooling circuit of the engine.

2. A fuel vapour recovery device according to claim 1 characterised in that said heat-exchanger means are formed by a radiator (2) of the type comprising two water chambers (5) connected by a bank of finned tubes (4) and that the filter (1) is directly fixed on one of said water chambers (5).

3. A fuel vapour recovery device according to claim 1 characterised in that the filter (1) extends in the lateral prolongation of the radiator on the outside of the flow of hot air.

4. A fuel vapour recovery device according to either one of claims 2 and 3 characterised in that the filter (1) is positioned on the water chamber (5) by pivot suspension means (7).

5. A fuel vapour recovery device according to claim 4 characterised in that said suspension means are formed by two hinges (7) of the type comprising a male knuckle member and a female knuckle member, permitting easy assembly and removal of the filter (1) to and from the associated water chamber (5).

6. A fuel vapour recovery device according to either one of claims 4 and 5 characterised in that the filter (1) and the associated water chamber (5) have corresponding fixing lugs permitting the filter (1) to be anchored on the water chamber by a simple fixing screw (6).

## Patentansprüche

1. Vorrichtung zur Rückgewinnung von Kraftstoffdämpfen aus dem Tank eines Motorfahrzeugs, mit einem Filter (1), der einen Dämpfe adsorbierenden Stoff enthält, wobei der Filter (1) über eine Leitung mit einer Luftquelle zur Regenerierung des adsorbierenden Stoffes verbunden ist, dadurch gekennzeichnet, daß die Eintrittsöffnung dieser Leitung (3) in der Nähe eines Wärmetauschers (2) mündet, der zum Kühlkreislauf des Motors gehört.

2. Vorrichtung zur Rückgewinnung von Kraftstoffdämpfen nach Anspruch 1, dadurch gekennzeichnet, daß der Wärmetauschers aus einem Radiator (2) mit zwei Wassergefäßen (5) besteht, die durch eine Reihe von mit Kühlrippen versehene Rohre (4) miteinander verbunden sind, und daß der Filter (1) direkt an einem der Wassergefäße (5) befestigt ist.

3. Vorrichtung zur Rückgewinnung von Kraftstoffdämpfen nach Anspruch 1, dadurch gekennzeichnet, daß sich der Filter (1) in der seitlichen Verlängerung des Radiators außerhalb des heißen Luftstromes befindet.

4. Vorrichtung zur Rückgewinnung von Kraftstoffdämpfen nach einem der Ansprüche 2 bis 3, dadurch gekennzeichnet, daß der Filter am Wassergefäß (5) über eine drehbare Aufhängung (7) befestigt ist.

5. Vorrichtung zur Rückgewinnung von Kraftstoffdämpfen nach Anspruch 4, dadurch gekennzeichnet, daß die Aufhängung aus zwei Scharnieren (7) besteht, die eine Scharnierhülse und einen Scharnierzapfen aufweisen, um so eine leichte Anbringung und eine leichte Annahme des Filters (1) am zugehörigen Wassergefäß (5) zu ermöglichen.

6. Vorrichtung zur Rückgewinnung von Kraftstoffdämpfen nach einem der Ansprüche 4 bis 5, dadurch gekennzeichnet, daß der Filter (1) und das zugehörige Wassergefäß (5) angepaßte Befestigungslaschen aufweisen zur Befestigung des Filters (1) am Wassergefäß mittels einer einfachen Befestigungsschraube (6).
